# EUROPEAN PATENT SPECIFICATION

(11) **EP 4 445 060 B1**
(45) Date of publication and mention of the grant of the patent: **21.10.2026**
(21) Application number: 23704153.8
(22) Date of filing: 13.02.2023
(51) Int. Cl.: F16L 55/163, F16J 15/10, F16L 55/179, E03F 3/06, F16L 17/067, F16L 17/10

(54) **ASSEMBLY FOR REPAIRING AND SEALING A SEWER SYSTEM AT A JUNCTION BETWEEN A MAIN PIPELINE AND A LATERAL PIPELINE**
ANORDNUNG ZUR REPARATUR UND ABDICHTUNG EINES ABWASSERSYSTEMS AN EINER VERBINDUNG ZWISCHEN EINER HAUPTROHRLEITUNG UND EINER SEITLICHEN ROHRLEITUNG
ENSEMBLE DE RÉPARATION ET D'ÉTANCHÉITÉ D'UN SYSTÈME D'ÉGOUT AU NIVEAU D'UNE JONCTION ENTRE UNE CANALISATION PRINCIPALE ET UNE CANALISATION LATÉRALE

(30) Priority: 15.02.2022 EP 22156734
(43) Date of publication of application: 16.10.2024
(73) Proprietor: Per Aarsleff A/S, 8260 Viby J. (DK)
(72) Inventor: RASMUSSEN, Mogens Pagter, 8260 Viby J (DK); RASMUSSEN, Bent Sloth, 8260 Viby J (DK)
(74) Representative: Budde Schou A/S
(86) International application number: PCT/EP2023/053507
(87) International publication number: WO 2023/156340

(56) References cited:
- EP-A1- 0 468 058
- KR-U- 20180 002 462
- US-A- 3 642 294

## Description

An assembly for repairing and sealing a sewer system at a junction between a main pipeline and a lateral pipeline

The present disclosure relates to the field of repairing pipelines such as a pipeline of a sewer system.

Specifically for repairing a sewer system at a junction between a main pipeline and a lateral pipeline, i.e. at the connection between the main pipeline and the lateral pipeline. A lateral pipeline is also known as a branch pipeline/connection/passageway. It may serve as a connection between the main pipeline and a building such as a house.

The lateral pipeline may have an angle, i.e. it may be inclined.

The junction may be a T-junction or a Y-junction.

Since exchanging pipelines is usually a costly and time-consuming process it is well known to patch and/or reline the existing pipelines instead. However, for such solutions to be feasible it is necessary to create tight seals between the installed pipelines and the lining or leakage will occur through gaps.

When repairing a junction in a sewer system, a **repair assembly** may be used. The repair assembly may be a full-wrap or a hat. The full-wrap may be a liner having a T-shape or a Y-shape.

The main pipeline of the sewer system may comprise a **main liner** that has been installed before the seal and repair assembly, i.e. a sewer system may constitute a pipeline with a liner installed, and a repair assembly is afterwards installed at the junction. In some cases the sewer system is not fitted with a liner, instead only the repair assembly is used for repairing the sewer.

The repair assembly may be impregnated with a liquid material capable of curing and hardening.

Achieving a good seal is particularly challenging at junctions between main pipelines and lateral pipelines such as the lateral pipelines connecting households to a pipeline network such as sewer system/sewage network.

Attempts have been made in the art to prevent leakage at pipeline junctions by including some form of a seal. For example, by including a dispensable sealant impregnated in a compressible seal that may cure and/or expand in contact with water (hydrophilic seal) as disclosed in US10458591. Other suitable seals are known, for example, from KR20180002462U or EP0468058A1.

However, such sealant may not be good for the environment or the workers working with the installation. The lifetime of such a hydrophilic seal may also not be as long as desired, i.e. the effect of such a sealing method may be degraded as it is dried and wetted over again when fluid flows in the sewer and when the ground water level rises and falls and causing variations in the degree of infiltration of ground water into the sewer system.

the invention is an assembly for repairing and sealing a sewer system at a junction between a main pipeline and a lateral pipeline, according to the technical features of independent claim 1. Advantageous embodiment of the invention are defined in the dependent claims. A first aspect of the present disclosure is:
A seal such as a gasket or band for sealing the space between a sewer system and a repair assembly at a junction between a main pipeline and a lateral pipeline,
said seal comprising:
   - a seal base having a first side for facing said sewer system,
      and a second side opposite said first side for facing said repair assembly,
      said seal base having a seal opening,
   - a lip protruding from said seal base,
said lip comprising a flexible material such as an elastic or a compressible material such as rubber or silicone,
said lip being in a first state when no external force is exerted on said seal, and
said lip being in a second state when external force is exerted on said seal,
such that pressure exerted on said seal by a fluid flowing from outside or inside said sewer system reinforces the sealing during intended operational use of said seal.

Preferably, the material of the seal and/or lip is a material that may withstand the environment, i.e. the chemistry in the resin of the repair assembly or drain cleaner for example.

The material of the seal and/or lip may also be **transparent** such that any resin on the opposite side of the seal than a light source may be cured by light transmitted through the transparent seal.

The lip (or rib) is to be understood as a part of the seal which is raised from the base, i.e. protrudes from the base (from the first side or second side).

The lip does not necessarily have the same shape as a lip (of a human anatomy).

The lip may be shaped to define an edge and be made of a material such that the lip is flexible, i.e. the edge may be displaced.

Specific examples of shapes may be a lip having a cross section in the shape of a pole/rod standing on the base (the length being greater than the diameter). For that shape the edge is at the tip (or top) of the lip.

Or the lip may have a cross section in the shape of a polygon, for example a triangle such that the base (proximal end) of the lip is wider than the (distal end) of the lip. This may cause the edge of the lip to bend before the rest of the lip.

Another example of a polygon is four-sided polygon such as a rectangle or a square or a trapez (inversed such that the narrow end of the trapez being at the seal base and the wide end of the trapez being the distal end). A trapez shaped lip may be on both sides of the seal base. The edge is where two of the sides meet. A four-sided polygon can be said to constitute two lips.

The lip may have an inclination/angle with respect to said seal base for encouraging the lip to bend when the seal is pressed between the repair assembly and the side/wall of the sewer system, i.e. the lip may have a side that has an angle/inclination or the lip may have a centerline between its proximal end and distal end, and this centerline may have an inclination with respect to the seal base.

When/during the seal is installed, pressure is applied to the seal such that it is pressed towards the sewer system.

The lip has a shape that makes it contact the surface of the sewer system, specifically the top of the lip is the first part of the lip that contacts the sewer system.

As the lip contacts the sewer system it is met with a reaction force that causes the lip to fold down towards the base (bias state), i.e. the lip may change form/shape as the seal is pressed towards the sewer system - the lip may have a different shape or at least a different angle than in the relaxed (first) state when the seal has been installed in its intended position. In this (bias) state the lip has a bias towards the relaxed state.

The repair assembly is at the same time cured, and when the installation device is pulled out of the sewer system, the repair assembly stays in place with the seal in the bias state.

Specifically, the lip is shaped such that it bends or flexes at the edge (or the tip of the lip). This causing the edge to be closer to the base than in the relaxed state.

It is contemplated that the centerline of the lip or a side of the lip becomes curved to a greater degree than in the relaxed state such that there may be an apex of the curve that is the part of the lip closest to the sewer system, i.e. compared to the relaxed state.

When fluid flows in the sewer system or leaks into the space that the seal occupies, a lip may be pressed on by the fluid, as when the seal was installed. The pressure may correspond to a force acting on the lip in the direction of the fluid flow.

The fluid pressure will press the lip towards the sewer system, and the lip will be met by a reaction force. This will reinforce the sealing, because the fluid pressure is actually pressing the seal and forcing the seal in place making it more difficult for fluid to find a way around the seal, i.e. the higher the fluid pressure, the higher reaction force and the better is the seal held in place.

The force/pressure on the lip will cause the state of the lip to change, i.e. it may be compressed a little or change position or shape a little, because it is between the force from the fluid and the reaction force.

The risk of leakage past the seal is reduced, because the fluid will have to press the edge backwards, but the side/wall of the sewer system is in the way of such movement of the tip.

Thus, the seal may constitute a mechanical seal, and it may experience three states, a first state constituting a relaxed state for example when the seal is resting on a table before installation. A bias state where the seal is installed in the sewer system and pressed between the repair assembly and sewer system. A second state where fluid pressure is pressing on the seal.

The base is preferably planar, but may according to the manufacturing process and tolerances be thicker some places than other.

When mounted in a pipeline it is however to be understood that the base will due to its flexibility be able to bend in order to mount the seal on an installation device for installing the repair assembly and seal, but also to follow the curvature of the pipeline in which it is mounted.

The base may have an opening that corresponds to the dimensions of the opening of the main pipeline, i.e. the opening into the lateral pipeline.

The lip may be arranged such that when seen in the plane of the base, the edge is further from the seal opening than the proximal end, for example when considered as a projection of the edge onto the plane of the base.

The proximal end is to be understood as the end of the lip that is at the base, i.e. the lip may be connected to the base at the proximal end. Such a connection may for example be facilitated during the casting of the seal or by an adhesive.

Instead of or in addition to the seal being at the junction, a seal may be at the end of the full wrap for example, i.e. a seal may be placed at each end of the full-wrap. For a T-shaped full-wrap a total of three seals may be used.

A seal to be placed at an end may be shaped as a cylindrical band. The cylindrical band forms the base of the seal and lips may protrude from the base as for the seal at the junction, i.e. the lips may be on both the inside and the outside and face in opposite directions.

A flexible material such as an elastic or a compressible material is to be understood as a material that allows for the lip to be bend during installation without being too much deformed such that the seal loses its effect. It is not necessary that the seal expands when it is in contact with the water. It is contemplated that the lip is non-expanding.

The first lip may be on the first side of the seal base or it may be on the second side of the seal base.

The first lip may be angled towards the outer seal edge such that the edge is closer to the outer seal edge than it is to the seal opening. Such a lip is for preventing fluid from the sewer system to pass the seal.

Alternatively, the lip may be angled towards the seal opening such that the edge is closer to the seal opening than it is to the outer seal edge. Such a lip is for preventing fluid leaked from outside the sewer system to pass the seal.

By a contour line is understood a line which maintains a fixed distance to the seal opening along the course of the loop formed by the seal base, such that it has the same shape as the seal opening while having a larger radius or radii.

By a predetermined contour line is understood that for the given variant of the seal the first lip is arranged with respect to a specific contour line having a specific distance to the seal opening while other variants of the seal within the first aspect may be arranged with respect to a contour line with another distance from the seal opening.

In some preferred variants of the seal the predetermined contour line is the centre line of the seal base where the contour line is equidistant with respect to the outer seal edge and the inner seal edge, i.e. the edge at the seal opening. In other variants the contour line may be offset with respect to the centre line.

By a y-shaped pipeline junction also known as a wye junction is understood a junctions where the branch pipeline extends from the main pipeline at a non-perpendicular angle. In such a junction it is preferred that the seal has a shape not being rotational symmetric in the plane of the seal base, because a circular seal base will not cause as tight a seal at the junction opening.

The seal may be used with a full wrap liner which forms a tube for lining part of the lateral pipeline and another tube for lining part of the main pipeline in the vicinity of the pipeline junction.

The seal may also be used with a hat liner which forms a tube for lining part of the lateral pipeline and a brim which lines part of the main liner surrounding the junction opening.

Having multiple lips protruding from the seal base provides various benefits depending on the arrangement of the lips along the seal base. Lips angled in opposite directions, that is the combination of an outward lip and an inward lip has the benefit of providing the sealing functionality against fluid flow in both directions.

The disclosure will now be explained in more detail below by means of examples with reference to the accompanying drawings.

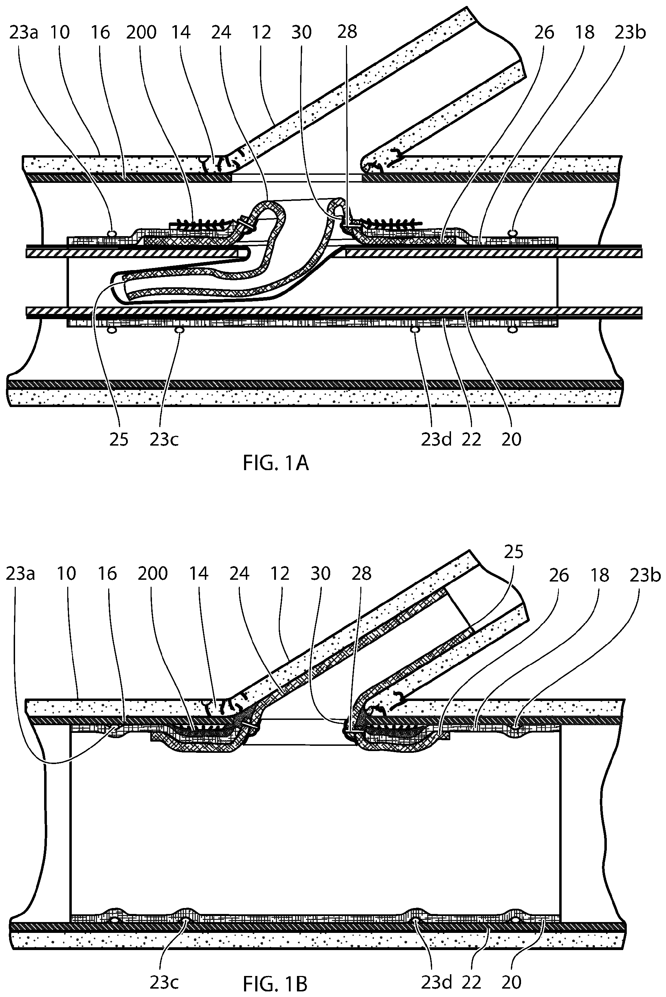

**Fig. 1A** shows a cross section of a sewer system at a junction between a main pipeline 10 and another pipeline 12 (often termen lateral pipeline or branch pipeline), which may be a pipeline leading to the main pipeline from a residential building for example. The drawing is not to scale.

The pipeline junction may be of any shape. It may be a T-junction where the branch pipeline extends perpendicular to the main pipeline at least in the vicinity of the pipeline junction. It may also be a Y-junction where the branch pipeline is oblique with respect to the main pipeline.

The sewer system has a fracture 14 at the junction. Sewage may therefore leak into the ground and/or ground water may seep into the sewer system causing more sewer waste to be disposed off.

The sewer system may comprise a main liner 16, which has been installed/placed around the main pipe line as part of repairing/relining. The main liner improves the repair compared to a situation where no main liner is used.

For repairing the fracture a repair assembly is used. This is typically a so called full-wrap or a hat. The hat may be a liner in the shape of a hat. In the figures a full-wrap 18 is illustrated. The repair assembly may also ensure a seal in the transition from the main pipe line to the lateral pipeline.

The repair assembly includes a seal (gasket) 200.

The repair assembly is introduced into the sewer system on a launcher device/installation device. The launcher device comprises a frame 20 and a bladder 22 mounted on the frame.

On the outside of the bladder lays the repair assembly.

The full-wrap has a first tubular part for mounting in the main pipeline and a second tubular part 24 for mounting in the lateral pipeline. The full-wrap may be a liner of felt material with a liquid resin that cures into a solid state for example by exposure to electromagnetic radiation, i.e. both the first tubular part and the second tubular part may be a felt material impregnated with a resin.

The second tubular part has a distal end 25 which goes up into the lateral pipe line, and a proximal end (opposite the distal) at the junction when the repair assembly is in its intended position.

The second tubular part is in an inverted position inside the bladder and ready to be everted into the lateral pipeline when pressure is applied to the bladder.

The repair assembly may be held on the launcher device by a first band, such as a first elastic band 23a at a first end of the first tubular part and a second elastic band 23b at a second end of the first tubular part.

In general, the band may be made of a flexible material such as an elastic material. The band is to be placed between the gasket 200 and an end of the first tubular part.

The band is to go all around (360 degrees) the launcher device. The band expands when pressure is applied to the launcher device.

The full-wrap may be assembled by joining the two tubular parts by means of an annular disc/hat brim 26. The brim connected to the second tubular part by sewing/stitching the two together with a thread 28, i.e. sewing at the interior rim of the brim and at the proximal end of the second tubular part.

Like the full-wrap liner, the brim may also constitute a liner of a felt material impregnated with a resin which hardens and bonds the brim and first tubular part together. The brim is between the bladder and the first tubular part of the full-wrap.

A piece of tape covers/overlaps the transition between the brim 26 and the second tubular part 24, and goes over the stitching/thread 28 for reducing leakage that may happen through the stitching. The tape may be put on by adhesive on vulcanized together with the brim and second tubular part

On the outside (side facing the sewer system) of the first tubular part lays the gasket 200.

The gasket is held on the launcher device by a band, such as a third elastic band 23c and a fourth elastic band 23d. This band may have the same material properties as the first band, and it is to go all around (360 degrees) the launcher device. The band also expands when pressure is applied to the launcher device.

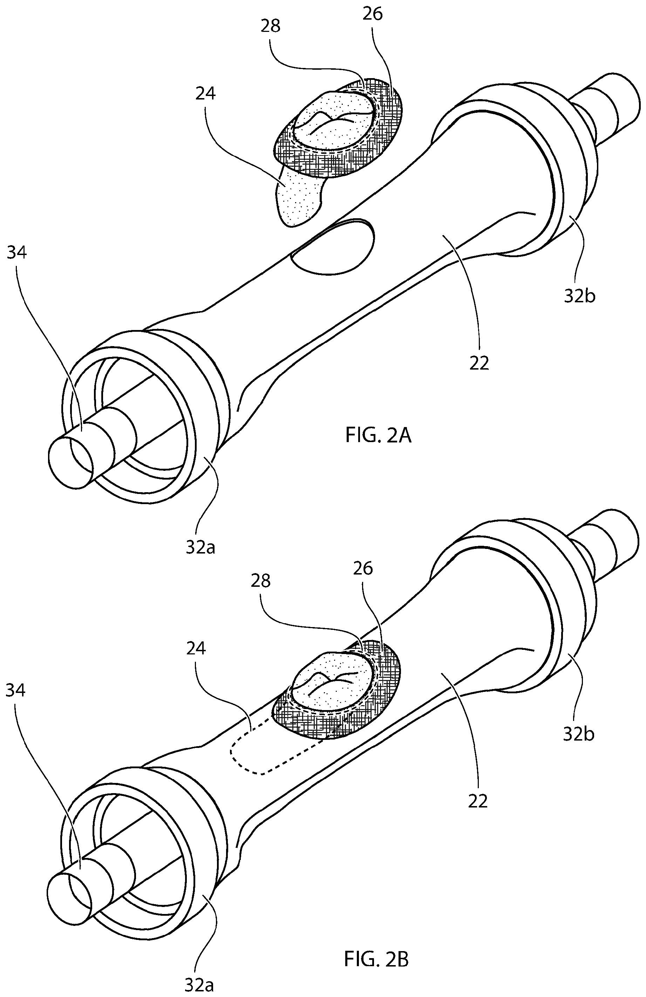

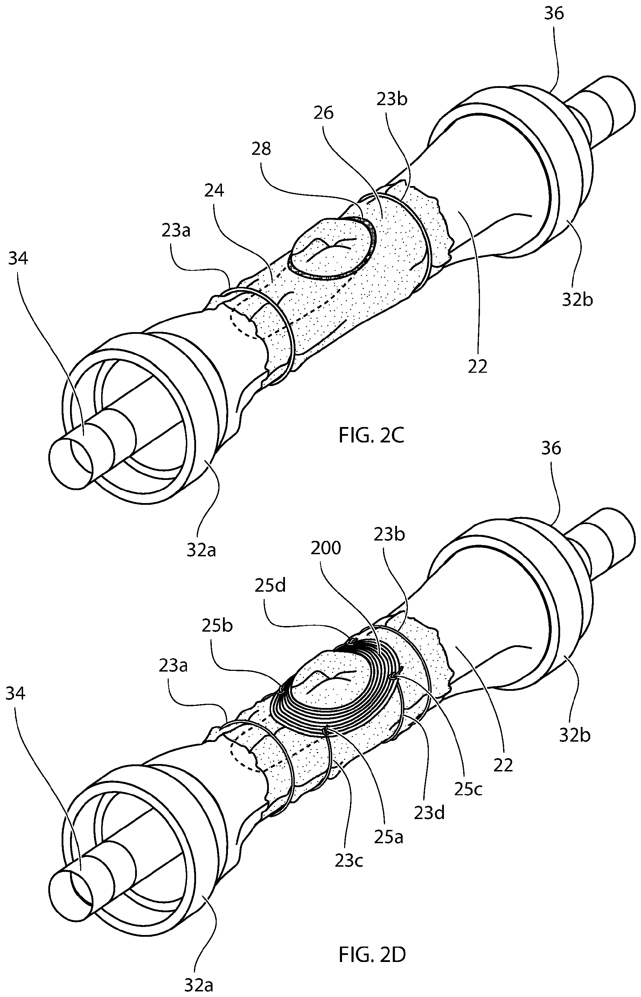

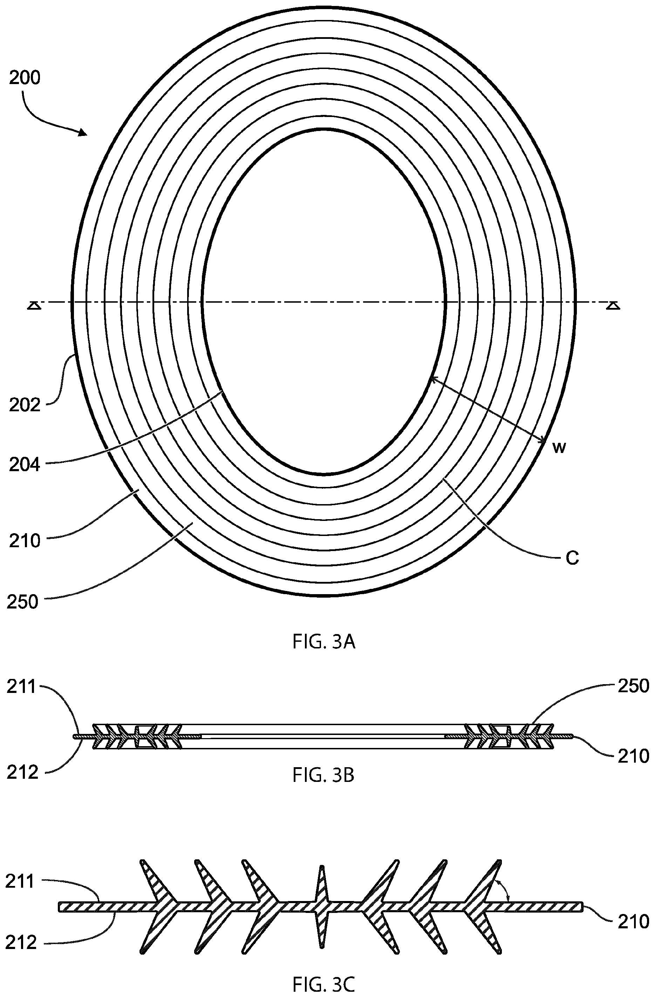

The steps of the assembly of the repair assembly is further illustrated in fig. 2, and the gasket is further illustrated in fig. 3. The gasket is a solid material, and does not include any liquid.

**Fig. 1B** shows a cross section of the repair assembly when it has been installed in its intended position at the junction, and when the launcher device has been removed after installation.

During installation, pressure is introduced in the launcher device, and the pressure expands the bladder such that the bladder presses the repair assembly towards the sewer system while at the same time, the resin of the repair assembly is cured for example by means of electromagnetic radiation such as UV light.

The first tubular part extends 360 degrees in the main liner, whereas for the hat solution, there would only be a brim around the junction opening in the main sewer line, i.e. the hat solution does not decrease the diameter of the sewer as the full-wrap solution.

The first band that holds the repair assembly on the launcher device is between the sewer system and the repair assembly.

The band that holds the gasket is between the gasket and the sewer system, and at the bottom of the sewer it is between the first tubular part and the sewer system.

Thus, the bands stay as part of the repair assembly after the repair assembly has been installed. The bands are not removed when the launcher is moved out of the sewer.

**Figs. 2a to 2d** illustrates the assembly of the launcher device with repair assembly including seal.

The bladder 22 is in a deflated state - preferably vacuum is in the launcher such that the bladder is sucked against the launcher frame (why the bladder appears folded).

The bladder is held on to the launcher at each end by a first clamp 32a and a second clamp 32b. Fluid such as compressed air for providing pressure in the launcher is supplied in a tube 34.

The second tubular part 24 of the full-wrap is arranged down into the bladder that is inside the launcher, i.e. the second tubular part goes into the opening in the middle of the launcher where the branch part of the bladder is inverted into.

The brim 26 is placed on the outside of the bladder around the opening.

The first tubular part is then placed on the launcher (on the outside of the bladder), fig. 2C. It may be moved into place by introducing it from the free end 36 of the launcher, and fold it and then hold it in place by the first band such as the first elastic band 23a and the second elastic band 23b. It is folded because the diameter of the launcher is smaller than the diameter of the main pipeline, which the first tubular part is made to match.

The seal/gasket 200 is then placed on the launcher (on the outside of the first tubular part), fig. 2D. It is held in place by a band such as a third elastic band 23c and a fourth elastic band 23d. Specifically, a first hole is made at the edge on the right side of the launcher and a second hole is made at the edge at the opposite side of the first hole. The first end of the third band 23c goes through the first hole, and a first knot 25a is tied. Similarly, the second end of the third band 23c goes through the second hole, and a second knot 25b is tied.

A third hole is made at the edge on the right side of the launcher and a fourth hole is made at the edge at the opposite side of the third hole. The first end of the fourth band 23d goes through the first hole, and a third knot 25c is tied. Similarly, the second end of the fourth band 23d goes through the fourth hole, and a fourth knot 25d is tied.

The band holding the gasket is not to extend over any of the lips, i.e. prevent movement of any of the lips during installation. Thus, the holes are made such that the bands do not put force on any of the lips so that they are not free to move.

The gasket may not necessarily be so flexible so that it follows the curvature of the launcher, i.e. gravity may not be so great so that the seal is forced in abutment against the launcher. This may cause the seal to hit the sewer during transport to the junction if the seal is not fixed to the launcher during transport.

As an alternative to fixing or attaching the seal with bands such as strings or wires, an insert is embedded in the seal such as inside the seal or on one of the sides of the seal. The insert may have a plasticity such that it may undergo permanent deformation, i.e. the seal may be bend to follow the curvature of the repair assembly on the launcher device (this means the seal will be deformed to a lower radius than when no external force is applied to the seal). The plasticity of the insert is to be greater than the plasticity of the seal - the seal is contemplated to be silicon, which normally is a material having some elasticity and not plasticity.

The seal then lies freely on the launcher on top of the full-wrap or hat during transport to the junction. When the bladder is inflated it deforms the seal so that it has a radius that matches the radius of the sewer system. It will retain this form, because the resin of the repair assembly has cured to a solid state. The insert may for example be a wire such as a metal wire.

**Fig. 3A** illustrates a top view of the seal 200, while fig. 3B illustrates a cross section of the seal at the dotted line between the deltas, and fig. 3C is a cross section at the full line with arrows at each end.

The seal 200 comprises a seal base 210 arranged to form a closed loop around the seal opening.

The seal base may have a uniform width w between the outer seal edge 202 and the inner seal edge 204 along its course. Alternatively, the width may vary, e.g. such that the width varies depending on the expected flow profile through the pipelines where the seal is mounted or to match variations in the junction opening.

The seal base is not necessarily circular, but may be oval-shaped such as elliptic. Such a shape is preferable for seals to be mounted at y-shaped pipeline junctions where a circular shape cannot provide as tight a seal.

The seal is illustrated with seven lips including a first lip 250. Any number of lips may be contemplated, and one lip may be enough for a sealing effect.

A lip has a proximal end at the seal base and a distal end/free end (opposite the proximal end).

A lip may extend 360 degrees around the seal opening. Alternatively, a lip may have a spirally path.

A lip is illustrated as having a triangular shape, with the base of the triangle at the seal base. Other shapes of a lip may be contemplated. However, a lip is to define an edge that may bend in order to reinforce the sealing as explained above.

The side of a lip may have an angle with respect to the seal base in order for the lip to bend. Such inclined side of a lip may increase the probability of the lip bending in order to increase the sealing effect.

The angle between the seal base and a side of a lip may be non-perpendicular.

The seal may comprise a (center) lip standing perpendicular on the seal base, i.e. a centerline of such lip may be perpendicular to the seal base. This lip may be shaped as a triangle or a polygon or it may be in the shape of a semi sphere. It may wider than it is high.

Thus, if pressing on that lip from the top, the lip is not inclined to bend left or right, but to provide a counter force and possible be pressed a little together, i.e. decrease in height, but increase in width. Such a lip may be arranged in the middle such that there is substantially the same distance to the inner and outer seal edge. Such a (center) lip may increase the stability of the seal base such that the seal base is less likely to bend.

The seal may comprise an outward lip having the distal end of the lip directed towards the outer seal edge 202. In other words the proximal end of the lip is arranged closer to the seal opening than the distal end when seen in the plane of the seal base 210, i.e. when projected onto the plane of the seal base 210.

In addition or alternatively, the seal may comprise a lip which is an inward lip having the distal end of the lip directed towards the inner edge 204 and the seal opening. In other words, the distal end of the lip is arranged closer to the seal opening than the proximal end when seen in the plane of the seal base 210, i.e. when projected onto the plane of the seal base 210.

In preferred embodiments of the seal 200, the seal comprises a plurality of sealing lips. In one variant, the seal 200 comprises both an inward lip and an outward lip on the first side 211 of the seal base. Such lips may for example be mirrored with respect to each other or they may have different angles with respect to the seal base 210. Having both inward and outward lips enables the sealing effect of the seal 200 for fluid flow in multiple directions around the pipeline junction 10.

In another variant comprising a plurality of sealing lips, the seal 200 may comprise a number of parallel outward lips that form a number of coaxial closed loops around the seal opening such that should fluid get past the first lip 250, it will encounter another lip.

In yet other variants comprising a plurality of sealing lips 250, the first side 211 of the seal base may comprise a number of parallel outward lips as well as a single inward lip or a plurality of parallel inwards lips.

In a preferred embodiment of such variants having both inward and outward lips, a contour line C of the seal base 210 enclosing the seal opening may be chosen for which the proximal end of any one of the lips is closer than the distal end of the same lip. In preferred embodiments, the contour line C is the centre line of the seal base 210 such that it is equidistant with respect to the outer seal edge 202 and the inner seal edge 204 at all points along the seal base 200. In other preferred embodiments, the contour line may be offset with respect to the centre line. In some preferred embodiments, a perpendicular lip is arranged along the contour line C.

In other preferred variants the arrangement of one or more sealing lips on the first side 211 of the seal base 210 may differ from the arrangement of the one or more sealing lips on the second side 212 of the seal base 210.

In a preferred embodiment the first lip or each of the plurality of lips forms a closed loop enclosing the seal opening. In a more preferred embodiment the one or more lips follow the same shape as the seal base 210 along their course. In a preferred embodiment where the seal base has the same thickness along its length, this leads to the distance between a lip and the outer seal edges 202 being the same along the entirety of the course of the lip as well as the distance between the lip and the inner seal edge 204 being the same along the entirety of the course of the lip. In preferred embodiments one or more lips are off-centre with respect to the seal base 200 such that the distance between the lip 250 and the outer seal edge 202 is different from the distance between the lip 250 and the inner seal edge 204.

All of the seal 200 may be made from the same flexible material, such that it may for example be produced by casting the entirety of the seal 200 simultaneously.

It is preferred that a lip is more flexible than the seal base. This may be achieved by the shape of the lip and/or the material of the lip.

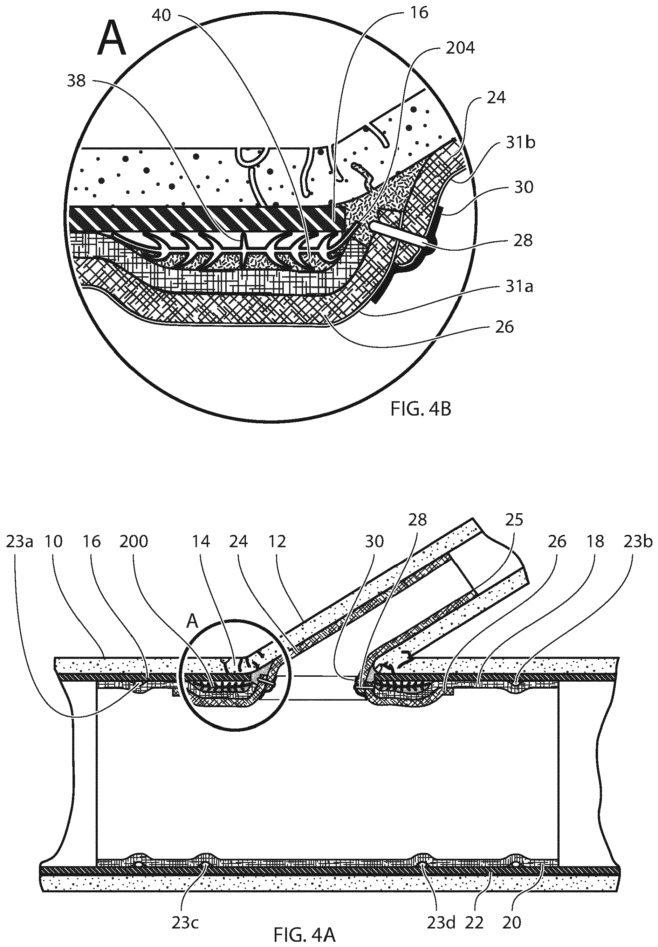

**Fig. 4B** is a close up of some of the lips of the seal after the repair assembly and seal has been installed, i.e. the seal in its intended position and how a lip is in the state after installation.

The center lip 38 abuts the sewer system (contacts the main liner 16 of the sewer system) for providing stability to the seal such that the seal base is less likely to bend.

The lips facing the repair assembly (contacting the first tubular part of the repair assembly) are embedded in resin 40 from the first tubular part. This resin has cured to a solid state.

During installation some of the resin may flow to the other side of the seal (than the side facing the first tubular part). For example, some resin has moved around the inner seal edge 204.

It is contemplated that the seal may be transparent such that resin that has moved around the inner or outer seal edge may be cured by transmitting electromagnetic radiation such as UV light through the seal.

Each lip is illustrated as being bend a bit, i.e. the tip (distal end) has been pressed against the sewer system and bend down.

Fluid flow in the system will have to force the tip/edge to bend backwards (in the opposite direction than what a lip was forced in during installation), but since the tip is met by the sewer system this will be very difficult and this improves the sealing.

Both the first tubular (liner) part, the second tubular (liner) part, and the brim have a layer/coating (preferably waterproof), i.e. layer 31a for the brim, and layer 31b for the second tubular part. The coating may be a GelCoat.

The coating is applied to the liner during manufacturing of the liner by for example milling the coating down into the liner (felt) material. The coating may have a thickness of for example in the range 1 mm to 10 mm such as 1/3 cm.

## Claims

1. An assembly for repairing and sealing a sewer system at a junction between a main pipeline (10) and a lateral pipeline (12), said assembly comprising:
- a repair assembly including a seal (200),
- a launcher device for introducing said repair assembly on said launcher device into said sewer system,
said seal comprising:
a seal base (210) having a first side (211) for facing said sewer system,
and a second side (212) opposite said first side for facing said repair assembly, said seal base having a seal opening,
a first lip (250) protruding from said seal base,
said first lip comprising a flexible material such as an elastic or a compressible material such as rubber or silicone,
said first lip having a non-perpendicular first angle to said seal base,
said seal being either fixed to said launcher device during transport to said junction, with bands, such as strings or wires, and comprised in the assembly or, said seal further comprises an insert embedded in said seal or arranged on said first side or said second side, said insert having a plasticity such that the seal may undergo permanent deformation, wherein the plasticity of the insert is to be greater than the plasticity of the seal and wherein, said seal lies then freely on the launcher device during transport to said junction.

2. The assembly according to any of the preceding claims, said seal base comprising a **seal opening.**

3. The assembly according to any of the preceding claims, said seal base having an **oval shape,** said oval shape preferably having a fat end or not being rotationally symmetric in the plane of the seal base.

4. The assembly according to any of the preceding claims, said seal base having an **annular oval shape,** said annular oval shape preferably having a fat end or not being rotationally symmetric.

5. The assembly according to any of the preceding claims, said seal base defining a shape being a closed curve.

6. The assembly according to any of the preceding claims, said seal base defining a shape being an open curve, preferably in the shape of a spiral.

7. The assembly according to any of the preceding claims, said first lip forming a loop around the seal opening.

8. The assembly according to any of the preceding claims, comprising an outer seal edge.

9. The assembly eeelaccording to any of the preceding claims, comprising a plurality of first lips protruding from said first side of said seal base and/or from said second side of said seal base.

10. The assembly according to claim 9, comprising a second lip having an angle no more than 25% different than said non-perpendicular first angle. angle of said plurality of first lips.

11. The assembly according to any of the preceding claims, said first lip constituting an outward facing lip, the distal end of said outward facing lip being closer to said outer seal edge than the proximal end of said outward facing lip.

12. The assembly according to any of the preceding claims, comprising an inward facing lip, the distal end of said inward facing lip being closer to said seal opening than the proximal end of said inward facing lip.

13. The assembly according to claim 12, said inward facing lip having an angle being mirrored with respect to said first angle of said first lip.

14. The assembly according to any of the preceding claims, comprising a third lip, said third lip protruding from the opposite side of said seal base than said first lip.

15. The assembly according to claim 14, said third lip constituting an inward facing lip, the distal end of said third lip being closer to said seal opening than the proximal end of said third lip.

## Patentansprüche

1. Baugruppe zum Reparieren und Abdichten eines Kanalsystems an einer Verbindungsstelle zwischen einer Hauptrohrleitung (10) und einer Seitenrohrleitung (12), wobei die Baugruppe umfasst:
- eine Reparaturbaugruppe, beinhaltend eine Dichtung (200),
- eine Einbringvorrichtung zum Einführen der Reparaturbaugruppe auf der Einbringvorrichtung in das Kanalsystem,
wobei die Dichtung umfasst:
eine Dichtungsbasis (210), aufweisend eine erste Seite (211) zum Zugewandtsein zu dem Kanalsystem,
und eine zweite Seite (212) gegenüber der ersten Seite zum Zugewandtsein zu der Reparaturbaugruppe, wobei die Dichtungsbasis eine Dichtungsöffnung aufweist,
eine erste Lippe (250), hervorstehend von der Dichtungsbasis,
wobei die erste Lippe ein flexibles Material wie ein elastisches oder ein komprimierbares Material wie Gummi oder Silikon umfasst,
wobei die erste Lippe einen nicht-senkrechten ersten Winkel zu der Dichtungsbasis aufweist,
wobei die Dichtung entweder an der Einbringvorrichtung während des Transports zu der Verbindungsstelle mit Bändern, wie Schnüren oder Drähten, befestigt und in der Baugruppe umfasst ist, oder wobei die Dichtung ferner eine Einlage umfasst, die in die Dichtung eingebettet oder auf der ersten Seite oder der zweiten Seite angeordnet ist, wobei die Einlage eine Plastizität aufweist, sodass die Dichtung eine bleibende Verformung erfahren kann, wobei die Plastizität der Einlage größer als die Plastizität der Dichtung sein soll und wobei die Dichtung dann frei auf der Einbringvorrichtung während des Transports zu der Verbindungsstelle liegt.

2. Baugruppe nach einem der vorhergehenden Ansprüche, wobei die Dichtungsbasis eine Dichtungsöffnung umfasst.

3. Baugruppe nach einem der vorhergehenden Ansprüche, wobei die Dichtungsbasis eine ovale Form aufweist, wobei die ovale Form vorzugsweise ein verdicktes Ende aufweist oder in der Ebene der Dichtungsbasis nicht rotationssymmetrisch ist.

4. Baugruppe nach einem der vorhergehenden Ansprüche, wobei die Dichtungsbasis eine ringförmige ovale Form aufweist, wobei die ringförmige ovale Form vorzugsweise ein verdicktes Ende aufweist oder nicht rotationssymmetrisch ist.

5. Baugruppe nach einem der vorhergehenden Ansprüche, wobei die Dichtungsbasis eine Form definiert, die eine geschlossene Kurve ist.

6. Baugruppe nach einem der vorhergehenden Ansprüche, wobei die Dichtungsbasis eine Form definiert, die eine offene Kurve ist, vorzugsweise in der Form einer Spirale.

7. Baugruppe nach einem der vorhergehenden Ansprüche, wobei die erste Lippe eine Schlaufe um die Dichtungsöffnung bildet.

8. Baugruppe nach einem der vorhergehenden Ansprüche, umfassend einen äußeren Dichtungsrand.

9. Baugruppe nach einem der vorhergehenden Ansprüche, umfassend eine Mehrzahl von ersten Lippen, hervorstehend von der ersten Seite der Dichtungsbasis und/oder von der zweiten Seite der Dichtungsbasis.

10. Baugruppe nach Anspruch 9, umfassend eine zweite Lippe, aufweisend einen Winkel, der nicht mehr als 25 % verschieden von dem nicht-senkrechten ersten Winkel ist. Winkel der Mehrzahl von ersten Lippen.

11. Baugruppe nach einem der vorhergehenden Ansprüche, wobei die erste Lippe eine nach außen weisende Lippe bildet, wobei das distale Ende der nach außen weisenden Lippe näher an dem äußeren Dichtungsrand liegt als das proximale Ende der nach außen weisenden Lippe.

12. Baugruppe nach einem der vorhergehenden Ansprüche, umfassend eine nach innen weisende Lippe, wobei das distale Ende der nach innen weisenden Lippe näher an der Dichtungsöffnung liegt als das proximale Ende der nach innen weisenden Lippe.

13. Baugruppe nach Anspruch 12, wobei die nach innen weisende Lippe einen Winkel aufweist, der in Bezug auf den ersten Winkel der ersten Lippe gespiegelt ist.

14. Baugruppe nach einem der vorhergehenden Ansprüche, umfassend eine dritte Lippe, wobei die dritte Lippe von der gegenüberliegenden Seite der Dichtungsbasis als die erste Lippe hervorsteht.

15. Baugruppe nach Anspruch 14, wobei die dritte Lippe eine nach innen weisende Lippe bildet, wobei das distale Ende der dritten Lippe näher an der Dichtungsöffnung liegt als das proximale Ende der dritten Lippe.

## Revendications

1. Ensemble de réparation et d'étanchéité d'un système d'égout au niveau d'une jonction entre une conduite principale (10) et une conduite latérale (12), ledit ensemble comprenant :
- un ensemble de réparation comportant un joint d'étanchéité (200),
- un dispositif de lancement destiné à introduire ledit ensemble de réparation sur ledit dispositif de lancement dans ledit système d'égouts,
ledit joint d'étanchéité comprenant :
une base de joint d'étanchéité (210) ayant un premier côté (211) destiné à faire face audit système d'égouts,
et un second côté (212) opposé audit premier côté destiné à faire face audit ensemble de réparation, ladite base de joint d'étanchéité ayant une ouverture de joint d'étanchéité,
une première lèvre (250) faisant saillie de ladite base de joint d'étanchéité,
ladite première lèvre comprenant un matériau flexible tel qu'un matériau élastique ou compressible tel que du caoutchouc ou du silicone,
ladite première lèvre ayant un premier angle non perpendiculaire à ladite base de joint d'étanchéité,
ledit joint d'étanchéité étant soit fixé audit dispositif de lancement pendant son transport vers ladite jonction, au moyen de bandes, telles que des cordons ou des fils, et compris dans l'ensemble, soit ledit joint d'étanchéité comprend en outre un insert noyé dans ledit joint d'étanchéité ou disposé sur ledit premier côté ou ledit second côté, ledit insert ayant une plasticité telle que le joint d'étanchéité puisse subir une déformation permanente, dans lequel la plasticité de l'insert doit être supérieure à la plasticité du joint d'étanchéité, et dans lequel ledit joint d'étanchéité repose alors librement sur le dispositif de lancement pendant son transport vers ladite jonction.

2. Ensemble selon l'une quelconque des revendications précédentes, ladite base de joint d'étanchéité comprenant une ouverture de joint d'étanchéité.

3. Ensemble selon l'une quelconque des revendications précédentes, ladite base de joint d'étanchéité ayant une forme ovale, ladite forme ovale ayant de préférence une extrémité épaisse ou n'étant pas symétrique par rotation dans le plan de la base de joint d'étanchéité.

4. Ensemble selon l'une quelconque des revendications précédentes, ladite base de joint d'étanchéité ayant une forme annulaire ovale, ladite forme annulaire ovale ayant de préférence une extrémité épaisse ou n'étant pas symétrique par rotation.

5. Ensemble selon l'une quelconque des revendications précédentes, ladite base de joint d'étanchéité définissant une forme étant une courbe fermée.

6. Ensemble selon l'une quelconque des revendications précédentes, ladite base de joint d'étanchéité définissant une forme étant une courbe ouverte, de préférence en forme de spirale.

7. Ensemble selon l'une quelconque des revendications précédentes, ladite première lèvre formant une boucle autour de l'ouverture de joint d'étanchéité.

8. Ensemble selon l'une quelconque des revendications précédentes, comprenant un bord d'étanchéité extérieur.

9. Ensemble selon l'une quelconque des revendications précédentes, comprenant une pluralité de premières lèvres faisant saillie dudit premier côté de ladite base de joint d'étanchéité et/ou dudit second côté de ladite base de joint d'étanchéité.

10. Ensemble selon la revendication 9, comprenant une deuxième lèvre présentant un angle différent au plus de 25 % dudit premier angle non perpendiculaire de ladite pluralité de premières lèvres.

11. Ensemble selon l'une quelconque des revendications précédentes, ladite première lèvre constituant une lèvre orientée vers l'extérieur, l'extrémité distale de ladite lèvre orientée vers l'extérieur étant plus proche dudit bord d'étanchéité extérieur que l'extrémité proximale de ladite lèvre orientée vers l'extérieur.

12. Ensemble selon l'une quelconque des revendications précédentes, comprenant une lèvre orientée vers l'intérieur, l'extrémité distale de ladite lèvre orientée vers l'intérieur étant plus proche de ladite ouverture de joint d'étanchéité que l'extrémité proximale de ladite lèvre orientée vers l'intérieur.

13. Ensemble selon la revendication 12, ladite lèvre orientée vers l'intérieur ayant un angle symétrique par rapport audit premier angle de ladite première lèvre.

14. Ensemble selon l'une quelconque des revendications précédentes, comprenant une troisième lèvre, ladite troisième lèvre faisant saillie du côté opposé de ladite base de joint d'étanchéité par rapport à ladite première lèvre.

15. Ensemble selon la revendication 14, ladite troisième lèvre constituant une lèvre orientée vers l'intérieur, l'extrémité distale de ladite troisième lèvre étant plus proche de ladite ouverture de joint d'étanchéité que l'extrémité proximale de ladite troisième lèvre.
